# EUROPEAN PATENT SPECIFICATION

(11) **EP 3 415 973 B1**
(45) Date of publication and mention of the grant of the patent: **25.11.2020**
(21) Application number: 17750154.1
(22) Date of filing: 02.02.2017
(51) Int. Cl.: G02B 27/01, B60K 35/00, B60R 11/02, H04N 5/74

(54) **DISPLAY DEVICE AND HEAD-UP DISPLAY**
ANZEIGEVORRICHTUNG UND HEAD-UP-ANZEIGE
DISPOSITIF D'AFFICHAGE ET AFFICHAGE TÊTE HAUTE

(30) Priority: 08.02.2016 JP 2016021665
(43) Date of publication of application: 19.12.2018
(73) Proprietor: Nippon Seiki Co., Ltd., Nagaoka-shi, Niigata 940-8580 (JP)
(72) Inventor: MOROHASHI,Kazuo, Nagaoka Niigata (JP); SATO,Megumi, Nagaoka Niigata (JP)
(74) Representative: Carpmaels & Ransford LLP
(86) International application number: PCT/JP2017/003820
(87) International publication number: WO 2017/138430

(56) References cited:
- WO-A1-2013/051376
- WO-A1-2016/027706
- JP-A- 2005 153 811
- JP-A- 2015 034 919
- US-A1- 2006 071 877
- US-A1- 2011 175 798
- US-A1- 2014 036 374

## Description

### Technical Field

The present invention relates to a display device capable of displaying images on a plurality of surfaces and a head-up display that causes the images displayed by this display device to be visually recognized as virtual images.

### Background Art

A conventional head-up display is disclosed in, for example, PTL 1. Such a head-up display projects projection light emitted from a single projector onto a first screen and a second screen provided at different distances from the projector and projects images displayed on the respective first and second screens onto a transmission reflection unit positioned in front of a viewer. With this, a virtual image based on the image displayed on the first screen and a virtual image based on the image displayed on the second screen are visually recognized at positions having different distances from the viewer.

Another example of a head-up display is disclosed in PTL 2. Provided is a display device granting perspective to a display image and having a visually dramatic effect. A display device provided with a projector for emitting a display light showing the display image, and a screen onto which the display light is projected and which is adapted for displaying the display image, the display device projecting the display image displayed on the screen onto a windshield using a first and second reflecting member, and displaying a display image (virtual image), wherein the display device has, as the screen, a first screen and a second screen forming a non-parallel state with the first screen; a first display image constituting part of the display image is displayed on the first screen; and a second display image with a different display form from the first display image is displayed on the second screen.

### Citation List

### Patent Literature

PTL 1: JP-A-2015-011211
PTL 2: WO 2013/051376 A1

### Summary of Invention

### Technical Problem(s)

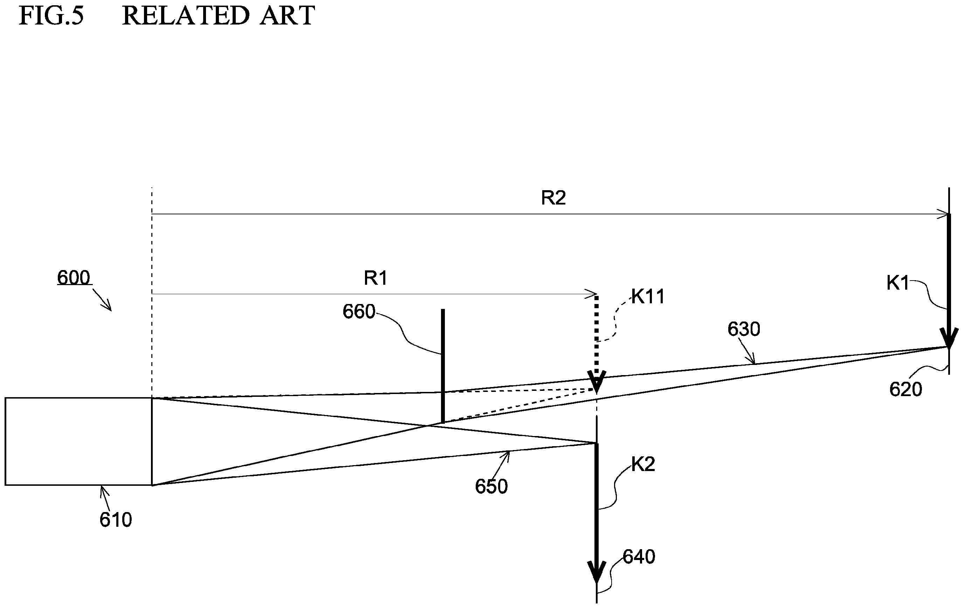

As illustrated in Fig. 5, in order to cause a single projector 610 to project images onto two screens 640 and 620 disposed at different distances R1 and R2, respectively, the projector 610 emits first projection light 630 for displaying a first image K1 on the first screen 620 and second projection light 650 for displaying a second image K2 onto the second screen 640 disposed to be closer to the projector 610 than the first screen 620 at substantially the same first projection distance R1 and includes a projection distance extending unit 660 that extends a projection distance of the first projection light 630 from the first projection distance R1 to the second projection distance R2 on a path of the first projection light 630 between the projector 610 and the first screen 620. This projection distance extending unit 660 forms an image K11 that has been supposed to be displayed at the first projection distance R1 similar to that of the second screen 640 on the first screen 620 further than the second screen 640 as the first image K1.

However, in a case where the first projection distance R1 of part (first projection light 630) of projection light is extended to the second projection distance R2 as described above, a size of the first image K1 displayed on the first screen 620 is larger than that of the image K11 that has been supposed to be displayed at the first projection distance R1. With this, it is problematic in that resolution of the first image K1 displayed on the first screen 620 is reduced.

In view of this, the invention provides a display device and a head-up display, each of which restrains reduction in resolution of an image.

### Solution to Problem(s)

In order to solve the above-mentioned problem, a display device according to a first aspect of the invention includes: a projector configured to emit projection light having a first projection distance; a first screen disposed at the first projection distance from the projector along the projection light and configured to receive first projection light of the projection light and display a first image; a second screen disposed at a position at which a distance from the projector along the projection light is shorter than the distance of the first screen and configured to receive second projection light of the projection light different from the first projection light and display a second image; and a projection distance shortening unit having positive refractive power (positive optical power), disposed on a path of the second projection light between the projector and the second screen, and configured to shorten a projection distance of the second projection light.

Further, a head-up display according to a second aspect of the invention includes: a projector configured to emit projection light having a first projection distance; a first screen disposed at the first projection distance from the projector along the projection light and configured to receive first projection light of the projection light and display a first image; a second screen disposed so that a distance from the projector along the projection light is shorter than the distance of the first screen and configured to receive second projection light of the projection light different from the first projection light and display a second image; a projection distance shortening unit having positive refractive power, disposed on a path of the second projection light between the projector and the second screen, and configured to shorten a projection distance of the second projection light; and a projection unit configured to project the first image displayed on the first screen and the second image displayed on the second screen toward a transmission reflection unit that is positioned in front of a viewer and cause the viewer to visually recognize virtual images based on the first image and the second image via the transmission reflection unit, in which the first screen is disposed so that an optical path of light based on the first image travelling toward the viewer is shorter than an optical path of light based on the second image.

### Advantageous Effects of Invention

It is possible to display a plurality of images at different positions in a depth direction with projection light emitted from a single projector while restraining reduction in resolution thereof.

### Brief Description of Drawings

[Fig. 1] Fig. 1 is a schematic configuration diagram of a head-up display in a first embodiment of the invention.
[Fig. 2] Fig. 2 illustrates a configuration of a display device in the same embodiment and optical paths of projection light.

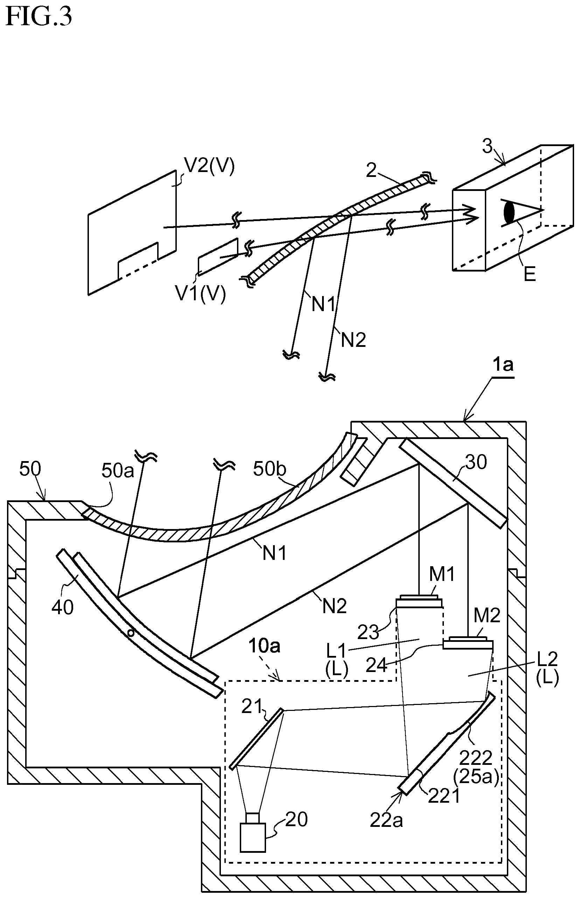

[Fig. 3] Fig. 3 is a schematic configuration diagram of a head-up display in a second embodiment of the invention.
[Fig. 4] Fig. 4 illustrates a configuration of a display device in the same embodiment and optical paths of projection light.
[Fig. 5] Fig. 5 illustrates a configuration of a conventional display device and optical paths of projection light.

### Description of Embodiments

Hereinafter, a first embodiment of a head-up display (hereinafter, referred to as "HUD") 1 and a display device 10 in the invention will be described with reference to the attached drawings.

### (First embodiment)

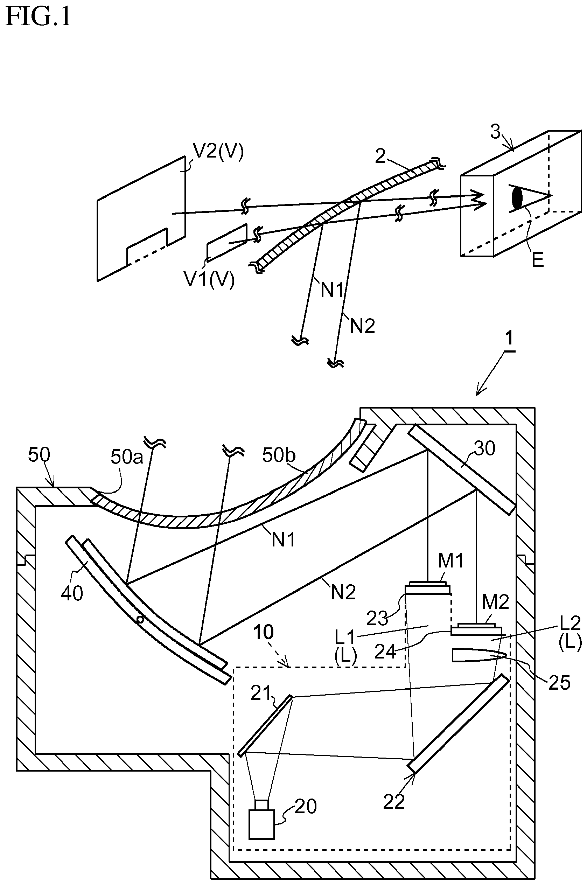

The HUD 1 is mounted on, for example, an automobile and, as illustrated in Fig. 1, includes the display device 10, a plane mirror (projection unit) 30, a concave mirror (projection unit) 40, a housing 50, and a control board (not shown). The HUD 1 reflects first display light N1 of a first image M1 and second display light N2 of a second image M2 displayed by the display device 10 toward a windshield (example of transmission reflection unit) 2 of a vehicle by using the plane mirror 30 and the concave mirror 40, thereby displaying a first virtual image V1 of the first image M1 and a second virtual image V2 of the second image M2 toward a viewer E. Although described in detail below, the display device 10 displays the first image M1 and the second image M2 so that a distance of the first display light N1 to reach a point of sight of the viewer E is shorter than a distance of the second display light N2. With this, the viewer E visually recognizes the first virtual image V1 based on the first image M1 at a position closer than that of the second virtual image V2 based on the second image M2.

The housing 50 is made from, for example, black light-shielding synthetic resin and includes the display device 10, the plane mirror 30, and the concave mirror 40 thereinside, and the control board (not shown) is attached to outside thereof.

The housing 50 has an opening 50a for allowing display light N (first display light N1, second display light N2) to pass through the windshield 2, and this opening 50a is covered with a light-transmissive cover 50b.

The display device 10 displays a plurality of images at different positions, respectively, in a depth direction. The display device 10 in this embodiment displays two images, i.e., the first image M1 and the second image M2 far from this first image M1 in the depth direction. Note that the display device 10 in the invention may display images at three or more different positions, respectively, in the depth direction. A configuration of the display device 10 will be described in detail below.

The plane mirror (projection unit) 30 is obtained by, for example, forming a reflective film on a surface of a base material made from a synthetic resin or glass material by means of vapor deposition or the like and reflects the first display light N1 based on the first image M1 and the second display light N2 based on the second image M2, which are displayed by a first screen 23 and a second screen 24 of the display device 10, toward the concave mirror 40.

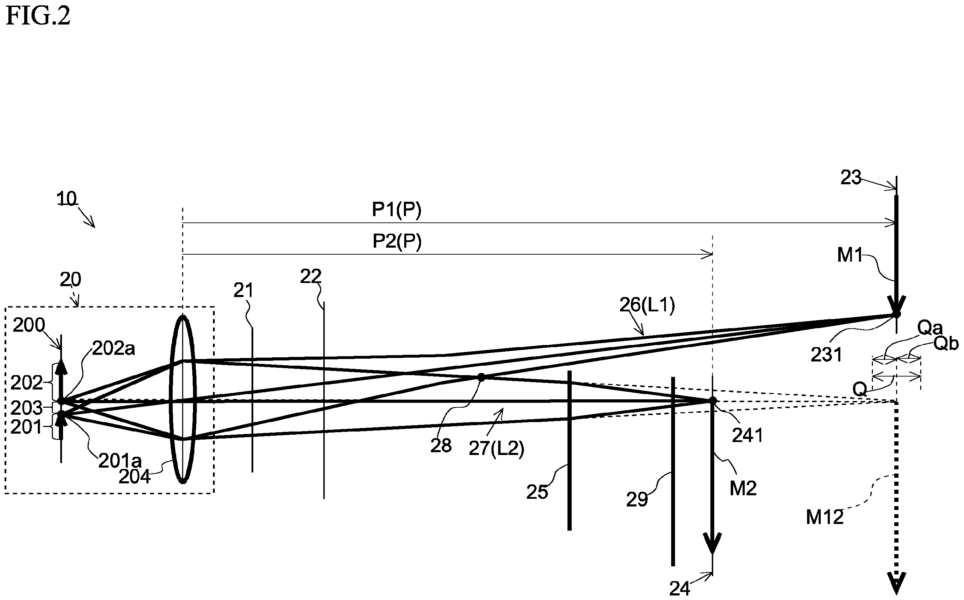

The concave mirror (projection unit) 40 is obtained by, for example, forming a reflective film on a surface of a base material made from a synthetic resin material by means of vapor deposition or the like and is a mirror having a concave free-form surface that further reflects the first display light N1 and the second display light N2 reflected by the plane mirror 30 and emits the first display light N1 and the second display light N2 toward the windshield 2. The first display light N1 and the second display light N2 reflected by the concave mirror 40 are transmitted through the light-transmissive cover 50b provided in the opening 50a of the housing 50 and reach the windshield 2. The first display light N1 and the second display light N2 are reflected by the windshield 2 toward the viewer E, and the first virtual image V1 based on the first display light N1 and the second virtual image V2 based on the second display light N2 are visually recognized by the viewer E. Note that the concave mirror 40 may function as a magnifier and magnify the first image M1 and the second image M2 displayed on the display device 10 and reflect the first image M1 and the second image M2 toward the windshield 2. Further, the concave mirror 40 may have a function of reducing distortion of the first virtual image V1 and the second virtual image V2 which is caused because the windshield 2 has a curved surface. Further, instead of reflective optical members such as the plane mirror 30 and the concave mirror 40 described above, the HUD 1 in the invention may include a refractive optical member such as a lens or a publicly-known optical member other than those optical members as the projection unit or may be a combination of optical members having different functions such as reflective, refractive, or other types of optical members. Hereinafter, a specific configuration of the display device 10 will be described with reference to Fig. 1 and Fig. 2. Fig. 2 illustrates paths of first projection light L1 and second projection light L2 emitted from the projector 20 and particularly illustrates a path of an image-forming luminous flux 26 that is part of the first projection light L1 and a path of an image-forming luminous flux 27 that is part of the second projection light L2, which are emitted from predetermined pixels 201a and 202a of a display 200 described below.

### (Display device 10)

As illustrated in Fig. 1, the display device 10 includes the projector 20 that emits projection light L, a first fold mirror 21 that reflects and turns back the projection light L from this projector 20, a second fold mirror 22 that reflects and turns back the projection light L from the first fold mirror 21, the first screen 23 that receives the first projection light L1 of the projection light L on a back surface thereof and displays the first image M1 obtained by forming an image of the first projection light L1 on a front surface thereof, the second screen 24 that receives the second projection light L2 of the projection light L on a back surface thereof and displays the second image M2 obtained by forming an image of the second projection light L2 on a front surface thereof, and a projection distance shortening unit 25 that is disposed on a path of the second projection light L2 between the projector 20 and the second screen 24 and shortens a projection distance P of the second projection light L2.

As illustrated in Fig. 2, the projector 20 includes the display 200 that generates projection light L and an image forming unit 204 that forms an image of the projection light L generated by the display 200 on a screen (first screen 23) further from the projector 20 and emits the projection light L having a first projection distance P1 equal to an optical path length of the projection light L between the image forming unit 204 and the first screen 23 toward the first fold mirror 21. Note that, hereinafter, part of the projection light L emitted by the projector 20 toward the first screen 23 will be referred to as "first projection light L1", and part of the projection light L emitted toward the second screen 24 will be referred to as "second projection light L2". The projection distance P herein indicates a distance between the image forming unit 204 and a position at which an image of the projection light L is formed and may be referred to as "projecting distance", "image-forming distance", "image-plane distance", or the like. The first projection distances P1 that the first projection light L1 and the second projection light L2 emitted by the projector 20 have do not need to be strictly equal to each other and only need to be substantially equal to each other. Specifically, the first projection distances P1 that the first projection light L1 and the second projection light L2 have only need to be within a focal depth Q within which a substantially focused image can be generated. Note that the focal depth Q includes a front focal depth Qa on the projector 20 (image forming unit 204) side from the first projection distance P1 and a back focal depth Qb on a side opposite the projector 20 (image forming unit 204) side from the first projection distance P1. Specifically, for example, the focal depth Q has a range of about 6 mm including the front focal depth Qa of 3 mm and the back focal depth of 3 mm. Note that the focal depth may be referred to as "image-plane depth".

The display 200 has a display region in which a plurality of pixels are arrayed in matrix, includes, for example, a reflective display element such as a digital micromirror device (DMD) or a liquid crystal on silicon (registered trademark: LCOS) and a transmissive display element such as a thin film transistor (TFT) liquid crystal panel, and emits the projection light L including the first projection light L1 for displaying the first image M1 and the second projection light L2 for displaying the second image M2 toward the first fold mirror 21 on the basis of a control signal from the control board (not shown).

Note that the display region of the display 200 includes a first display region 201 in which the first projection light L1 is generated, a second display region 202 in which the second projection light L2 is generated, and a third display region 203 in which display is not performed and which is positioned between and the first display region 201 and the second display region 202. In order to simplify the drawing, Fig. 2 only illustrates an optical path of the image-forming luminous flux 26 that is emitted from a pixel 201a on a boundary with the third display region 203 in the first display region 201 and forms an image at a point 231 that is the closest to the second screen 24 on the first screen 23 and an optical path of the image-forming luminous flux 27 that is emitted from the pixel 202a on a boundary with the third display region 203 in the second display region 202 and forms an image at a point 241 that is the closest to the first screen 23 on the second screen 24 and omits illustration of an optical path of projection light L other than the above optical paths.

The image forming unit 204 includes a single or plurality of lenses and magnifies and projects the projection light L generated by the display 200 toward the first screen 23 and the second screen 24. Further, the image forming unit 204 adjusts the projection distance P of the projection light L emitted from the projector 20. Specifically, the image forming unit 204 adjusts the projection distance P of the projection light L (first projection light L1, second projection light L2) to the first projection distance P1 equal to the distance between the image forming unit 204 and the first screen 23. In other words, the image forming unit 204 converges the image-forming luminous flux 26 collected from the image forming unit 204 toward the point 231 on the first screen 23 and the image-forming luminous flux 27 collected therefrom toward the point 241 on the second screen 24 at a position having the first projection distance P1 from the image forming unit 204. Note that the image forming unit 204 may include a single or plurality of curved mirrors.

The first fold mirror (reflection unit) 21 is disposed on a path of the projection light L between the projector 20 and the second fold mirror 22 and is made up of a plane mirror that reflects the first projection light L1 and the second projection light L2 emitted from the projector 20 on the same surface toward the second fold mirror 22 and does not have refractive power (optical power). An optical path of the projection light L is folded by providing the first fold mirror 21, and therefore a package size of the display device 10 in a primary direction is made more compact. The first fold mirror 21 in this embodiment is disposed to be closer to the projector 20 than a divergence point 28 at which the image-forming luminous flux 26 emitted from the pixel 201a on the boundary with the third display region 203 in the first display region 201 and the image-forming luminous flux 27 emitted from the pixel 202a on the boundary with the third display region 203 in the second display region 202 diverge (at which the first projection light L1 and the second projection light L2 diverge). With this, it is possible to reduce a size of the first fold mirror 21.

Note that a plurality of first fold mirrors 21 may be provided between the projector 20 and the second fold mirror 22, or the first fold mirror 21 may be omitted. Further, the first fold mirror 21 may be disposed further from the projector 20 than the divergence point 28. In a case where the first fold mirror 21 is disposed further from the projector 20 than the divergence point 28 as described above, the first fold mirror 21 may be dividedly provided, i.e., may be made up of a fold mirror that receives the first projection light L1 and a fold mirror that receives the second projection light L2.

The second fold mirror 22 is disposed on the path of the projection light L between the first fold mirror 21 and the first screen 23 and is made up of a plane mirror that reflects the first projection light L1 and the second projection light L2 emitted from the projector 20 toward the first screen 23 and the second screen 24 and does not have refractive power (optical power). The optical path of the projection light L is folded by providing the second fold mirror 22, and therefore the package size of the display device 10 in the primary direction is made more compact. The second fold mirror 22 in this embodiment is disposed to be closer to the projector 20 than the divergence point 28 at which the first projection light L1 and the second projection light L2 diverge. With this, it is possible to reduce a size of the second fold mirror 22.

Note that a plurality of second fold mirrors 22 may be provided between the first fold mirror 21 and the first screen 23, or the second fold mirror 22 may be omitted. Further, the second fold mirror 22 may be disposed further from the projector 20 than the divergence point 28. In a case where the second fold mirror 22 is disposed further from the projector 20 than the divergence point 28 as described above, the second fold mirror 22 may be dividedly provided, i.e., may be made up of a fold mirror that receives the first projection light L1 and a fold mirror that receives the second projection light L2.

The first screen 23 is a transmissive screen having a flat surface or curved surface and is made up of, for example, a holographic diffuser, a microlens array, a diffusion plate, and the like. The first screen 23 is disposed at a position that is the first projection distance P1 away from the image forming unit 204 of the projector 20 along an optical path of the first projection light L1, receives the first projection light L1 emitted from the projector 20 on a back surface thereof, and displays (forms) the first image M1 on a front surface thereof. When the first screen 23 displays the first image M1, the first display light N1 showing this first image M1 is projected by the projection units (plane mirror 30, concave mirror 40) toward the windshield 2 and is reflected by the windshield 2 toward the viewer E (eye-box 3 having predetermined region). With this, the viewer E directs his/her point of sight toward inside of the eye-box and can therefore visually recognize the first virtual image V1 on the other side of the windshield 2. Note that the first screen 23 does not need to be provided strictly at a position having the first projection distance P1 and only needs to be provided substantially in the vicinity of the position having the first projection distance P1. Specifically, the first screen 23 only needs to be provided within the focal depth Q from the first projection distance P1 and generate the substantially focused first image M1.

The second screen 24, as well as the first screen 23, is a transmissive screen having a flat surface or curved surface and is made up of, for example, a holographic diffuser, a microlens array, a diffusion plate, and the like. The second screen 24 is disposed at a position that is a second projection distance P2 shorter than the first projection distance P1 away from the image forming unit 204 of the projector 20 along an optical path of the second projection light L2, receives the second projection light L2 emitted from the projector 20 on a back surface thereof, and displays (forms) the second image M2 on a front surface thereof. When the second screen 24 displays the second image M2, the second display light N2 showing this second image M2 is projected by the plane mirror 30 and the concave mirror 40 described below toward the windshield 2, and the second virtual image V2 is displayed on the other side of the windshield 2 seen from the viewer E. Note that the second screen 24 does not need to be provided strictly at a position having the second projection distance P2 and only needs to be provided substantially in the vicinity of the position having the second projection distance P2. Specifically, the second screen 24 only needs to be provided within the focal depth Q from the second projection distance P2 and generate the substantially focused second image M2.

As illustrated in Fig. 1, the first screen 23 is disposed further from the projector 20 than the second screen 24. That is, an optical path length of the first display light N1 travelling from the first screen 23 to the viewer E is shorter than an optical path length of the second display light N2 travelling from the second screen 24 toward the viewer E. Therefore, a distance (display distance) between the viewer E and a position at which the first virtual image V1 is displayed is shorter than a distance (display distance) between the viewer E and a position at which the second virtual image V2 is displayed. Thus, the HUD 1 in this embodiment can perform display so that the first virtual image V1 is closer than the second virtual image V2. Note that, in this embodiment, the display distance of the first virtual image V1 is 2 meters, and the display distance of the second virtual image V2 is 5 meters.

Further, the first screen 23 is disposed so that a normal direction thereof is in parallel to an optical axis of the first display light N1 travelling toward the eye-box 3 via the projection units (plane mirror 30, concave mirror 40) and the transmission reflection unit (windshield 2), and, similarly, the second screen 24 is disposed so that a normal direction thereof is in parallel to an optical axis of the second display light N2 travelling toward the eye-box 3 via the projection units (plane mirror 30, concave mirror 40) and the transmission reflection unit (windshield 2). Note that the first screen 23 or/and the second screen 24 may be disposed so that the normal direction(s) has/have a predetermined angle from the optical axis/axes of the first display light N1 or/and the second display light N2. In such a case, the first virtual image V1 or/and the second virtual image V2 generated by the HUD 1 is/are visually recognized to be inclined from a vertical direction.

The projection distance shortening unit 25 is made up of a single one-side convex lens or biconvex lens having positive refractive power, is disposed on the path of the second projection light L2 between the first projection distance P1 and the divergence point 28, and adjusts the projection distance P of the second projection light L2 to the second projection distance P2 shortened from the first projection distance P1. With this, the second projection light L2 is displayed (formed) as the focused second image M2 on the second screen 24 disposed to be closer to the projector 20 than the first screen 23. With such a configuration, the first projection light L1 having the first projection distance P1 can be displayed as the focused first image M1 on the first screen 23 positioned far from the projector 20 without reducing resolution, whereas the second projection light L2 that has initially had the first projection distance P1 can be displayed as the focused second image M2 with high resolution on the second screen 24 positioned to be closer to the projector 20 than the first screen 23 by an effect of this projection distance shortening unit 25.

Note that the projection distance shortening unit 25 may be made up of a lens group including a combination of a single or plurality of one-side convex lenses, biconvex lenses, one-side concave lenses, and biconcave lenses and having negative refractive power as a whole.

A light distribution adjustment unit 29 is an optical system having negative refractive power, is made up of, for example, a single concave lens or a lens group including a single or plurality of concave lenses, and is disposed on the path of the second projection light L2 between the projection distance shortening unit 25 and the second screen 24. The light distribution adjustment unit 29 refracts an optical axis of the image-forming luminous flux 27 emitted from each pixel of the second display region 202 on the display 200 and emits the optical axis toward the second screen 24. Even in a case where the image-forming luminous flux 27 (second projection light L2) emitted from each pixel of the display 200 is adjusted by the projection distance shortening unit 25 in a convergence direction, it is possible to correct the second display light N2 emitted from each pixel of the second screen 24 in a divergence direction, and therefore, even in a case where the projection distance shortening unit 25 is used, it is possible to appropriately direct the second display light N2 emitted from the second screen 24 toward the eye-box 3 of the viewer E.

The configurations of the display device and the head-up display in the first embodiment of the invention have been described above.

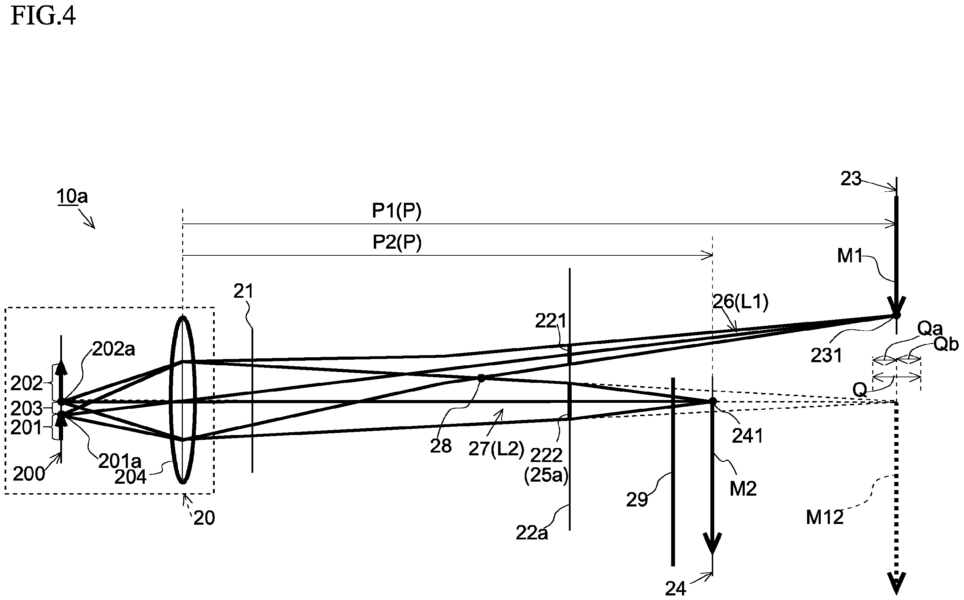

Hereinafter, a second embodiment of the display device and the head-up display in the invention will be described with reference to Fig. 4 and Fig. 5. Note that configurations the same as those of the first embodiment will be denoted by the same reference signs, and detailed description thereof will be omitted.

Fig. 4 illustrates a schematic configuration of an HUD 1a in the second embodiment, and Fig. 5 illustrates disposition of optical members in a display device 10a in the second embodiment and optical paths of the first projection light L1 (image-forming luminous flux 26) and the second projection light L2 (image-forming luminous flux 27) .

### (Second embodiment)

The display device 10a in the second embodiment is different from the display device in the first embodiment in that a projection distance shortening unit 25a is made up of a reflective curved surface 222 on a second fold mirror 22a.

The second fold mirror 22a in the second embodiment has at least a reflection plane 221 that is disposed further from the projector 20 than the divergence point 28 at which the first projection light L1 and the second projection light L2 diverge, reflects the first projection light L1, and does not have refractive power and the concave reflective curved surface 222 that has positive refractive power for reflecting the second projection light L2 and functions as the projection distance shortening unit 25a. The reflective curved surface 222 (projection distance shortening unit 25a) is formed as a convex free-form surface having positive refractive power or the like and adjusts the projection distance P of the second projection light L2 to the second projection distance P2 that is shortened from the first projection distance P1 adjusted by the image forming unit 204. With this, the second projection light L2 is displayed (formed) as the second image M2 that is focused on the second screen 24 disposed closer to the projector 20 than the first screen 23.

Note that a plurality of second fold mirrors 22a may be provided between the first fold mirror 21 and the second screen 24, and negative refractive power needed to extend the projection distance P of the second projection light L2 may be configured by refractive power of the plurality of second fold mirrors 22a. Further, the second fold mirror 22 may be dividedly provided, i.e., may be made up of a fold mirror that receives the first projection light L1 and a fold mirror that receives the second projection light L2.

Further, the projection distance shortening unit 25 may be made up of a combination of the refractive optical system described in the first embodiment and the reflective optical system described in the second embodiment.

As described above, the display device 10 in this embodiment includes: the projector 20 that emits the projection light L having the first projection distance P1; the first screen 23 that is disposed at the first projection distance P1 from the projector 20 along the projection light L, receives the first projection light L1 of the projection light L, and displays the first image M1; the second screen 24 that is disposed at a position at which a distance from the projector 20 along the projection light L is shorter than the distance of the first screen 23, receives the second projection light L2 of the projection light L different from the first projection light L1, and displays the second image M2; and the projection distance shortening unit 25 that has positive refractive power, is disposed on the path of the second projection light L2 between the projector 20 and the second screen 24, and shortens the projection distance P of the second projection light L2 to the second projection distance P2 shorter than the initial first projection distance P1. An optical member having negative refractive power is not disposed on the projector 20 side from the second screen 24 on the optical path of the first projection light L1 between the projector 20 and the first screen 23. Therefore, it is possible to display a plurality of images at different positions, respectively, in the depth direction with the projection light L emitted from the single projector 20 while restraining reduction in resolution thereof.

Further, the display device 10 in this embodiment further includes the reflection unit (second fold mirror 22a) that is disposed on the path of the projection light L between the projector 20 and the first screen 23 and reflects the first projection light L1 and the second projection light L2 toward the first screen 23 and the second screen 24, respectively, in which: the second fold mirror 22a includes the reflection plane 221 (first reflective surface) that reflects the first projection light L1 toward the first screen 23 and the reflective curved surface 222 (second reflective surface) that reflects the second projection light L2 toward the second screen 24; and the projection distance shortening unit 25a is formed as the reflective curved surface 222. As described above, the projection distance P of part of the projection light L (second projection light L2) can be shortened by the second fold mirror 22a, and therefore it is possible to form the first image M1 and the second image M2 on the first screen 23 and the second screen 24 having different projection distances P, respectively, while making the optical path of the projection light L compact by turning back the projection light L.

Further, the second fold mirror 22a in the second embodiment is provided so that the first projection light L1 and the second projection light L2 can be reflected on the same surface. This improves relative position accuracy of the first reflective surface 221 that receives the first projection light L1 and reflects the first projection light L1 toward the first screen 23 having a long projection distance P and the second reflective surface 222 that receives the second projection light L2 and reflects the second projection light L2 toward the second screen 24 having a short projection distance P. Thus, it is possible to restrain an image displayed on each screen from being out of focus and a projection position from being varied due to an assembly error or the like.

Further, in the display device 10 in this embodiment, the light distribution adjustment unit 29 having negative refractive power is disposed on the optical path of the second projection light L2 between the projection distance shortening unit 25 and the second screen 24. With such a configuration, even in a case where the image-forming luminous flux 27 (second projection light L2) emitted from each pixel of the display 200 toward the second screen 24 is adjusted in the convergence direction, it is possible to correct the second display light N2 emitted from each pixel of the second screen 24 in the divergence direction, and therefore, even in a case where the projection distance shortening unit 25 is used, it is possible to appropriately direct the second display light N2 emitted from the second screen 24 toward the eye-box of the viewer E.

In the above description, in order to easily understand the invention, description of unimportant publicly-known technical matters has been appropriately omitted.

### Industrial Applicability

The invention can be used as, for example, a display device or head-up display to be mounted on a vehicle. Reference Signs List

- 1, 1a: HUD (head-up display)
- 2: windshield (transmission reflection unit)
- 10, 10a: display device
- 20: projector
- 21: first fold mirror (reflection unit)
- 22, 22a: second fold mirror (reflection unit)
- 23: first screen
- 24: second screen
- 25, 25a: projection distance extending unit
- 26: image-forming luminous flux
- 27: image-forming luminous flux
- 28: divergence portion
- 29: light distribution adjustment unit
- 30: plane mirror (projection unit)
- 40: concave mirror (projection unit)
- 200: display
- 201: first display region
- 201a: pixel
- 202: second display region
- 202a: pixel
- 203: third display region
- 204: image forming unit
- 221: reflection plane (first reflective surface)
- 222: reflective curved surface (second reflective surface)
- E: viewer
- L: projection light
- L1: first projection light
- L2: second projection light
- M: image
- M1: first image
- M2: second image
- N: display light
- N1: first display light
- N2: second display light
- P: projection distance
- P1: first projection distance
- P2: second projection distance
- V1: first virtual image
- V2: second virtual image

## Claims

1. A display device (10), comprising:
a projector (20) configured to emit projection light (L) having a first projection distance (P1);
a first screen (23) disposed at the first projection distance (P1) from the projector (20) along the projection light (L) and configured to receive first projection light (L1) of the projection light (L) and display a first image (M1);
a second screen (24) disposed at a position at which a distance from the projector (20) along the projection light (L) is shorter than the distance of the first screen (23) and configured to receive second projection light (L2) of the projection light (L) different from the first projection light (L1) and display a second image (M2) **characterized in that** the display device further comprises
a projection distance shortening unit (25) having positive refractive power, disposed on a path of the second projection light (L2) between the projector (20) and the second screen (24), and configured to shorten a projection distance of the second projection light (L2).

2. The display device (10) according to claim 1, further comprising a reflection unit (22) disposed on a path of the projection light (L) between the projector (20) and the first screen (23) and configured to reflect the first projection light (L1) and the second projection light (L2) toward the first screen (23) and the second screen (24), respectively, wherein:
the reflection unit (22) has a first reflective surface (221) that reflects the first projection light (L1) toward the first screen (23) and a second reflective surface (222) that reflects the second projection light (L2) toward the second : screen (24); and
the projection distance shortening unit (25a) is formed on the second reflective surface. (222).

3. The display device according to claim 2, wherein
the reflection unit (22) is provided so that the first projection light (L1) and the second projection light (L2) can be reflected on the same surface.

4. The display device according to any one of claims 1 to 3, wherein
a light distribution adjustment unit (29) having negative refractive power is disposed on an optical path of the second projection light (L2) between the projection distance shortening unit (25) and the second screen (24).

5. A head-up display (1) comprising the display device (10) according to any one of claims 1 to 4, further comprising a projection unit (40) configured to project the first image (M1) displayed on the first screen (23) and the second image (M2) displayed on the second screen (24) toward a transmission reflection unit (2) that is positioned in front of a viewer (E) and cause the viewer (E) to visually recognize virtual images based on the first image (M1) and the second image (M2) via the transmission reflection unit (2), wherein the first screen (23) is disposed so that an optical path of light based on the first image (M1) travelling toward the viewer (E) is shorter than an optical path of light based on the second image (M2).

## Patentansprüche

1. Displayeinrichtung (10), umfassend:
einen Projektor (20), der konfiguriert ist zum Emittieren von Projektionslicht (L) mit einer ersten Projektionsdistanz (P1);
einen ersten Schirm (23), der unter der ersten Projektionsdistanz (P1) von dem Projektor (20) und entlang des Projektionslichts (L) angeordnet und konfiguriert ist zum Empfangen von erstem Projektionslicht (L1) des Projektionslichts (L) und Anzeigen eines ersten Bilds (M1);
einen zweiten Schirm (24), der an einer Position angeordnet ist, bei der eine Distanz von einem Projektor (20) entlang des Projektionslichts (L) kürzer ist als die Distanz des ersten Schirms (23), und konfiguriert zum Empfangen von zweitem Projektionslicht (L2) des Projektionslichts (L) verschieden von dem ersten Projektionslicht (L1) und Anzeigen eines zweiten Bilds (M2), **dadurch gekennzeichnet, dass** die Displayeinrichtung weiter umfasst:
eine Projektionsdistanzverkürzungseinheit (25) mit einer positiven Brechleistung, auf einem Pfad des zweiten Projektionslichts (L2) zwischen dem Projektor (20) und dem zweiten Schirm (24) angeordnet,
und konfiguriert zum Verkürzen einer Projektionsdistanz des zweiten Projektionslichts (L2).

2. Displayeinrichtung (10) nach Anspruch 1, weiter umfassend
eine Reflexionseinheit (22), auf einem Pfad des Projektionslichts (L) zwischen dem Projektor (20) und dem ersten Schirm (23) angeordnet und konfiguriert zum Reflektieren des ersten Projektionslichts (L1) und des zweiten Projektionslichts (L2) zu dem ersten Schirm (23) beziehungsweise dem zweiten Schirm (24), wobei:
die Reflexionseinheit (22) eine erste reflektierende Oberfläche (221) aufweist, die das erste Projektionslicht (L1) zu dem ersten Schirm (23) reflektiert, und eine zweite reflektierende Oberfläche (222), die das zweite Projektionslicht (L2) zu dem zweiten Schirm (24) reflektiert; und
die Projektionsdistanzverkürzungseinheit (25a) gebildet ist auf der zweiten reflektierenden Oberfläche (222) .

3. Displayeinrichtung nach Anspruch 2, wobei
die Reflexionseinheit (22) so bereitgestellt ist, dass das erste Projektionslicht (L1) und das zweite Projektionslicht (L2) auf der gleichen Oberfläche reflektiert werden können.

4. Displayeinrichtung nach einem der Ansprüche 1 bis 3, wobei
eine Lichtverteilungsverstelleinheit (29) mit negativer Brechleistung auf einem optischen Pfad des zweiten Projektionslichts (L2) zwischen der Projektionsdistanzverkürzungseinheit (25) und dem zweiten Schirm (24) angeordnet ist.

5. Head-Up-Display (1) umfassend die Displayeinrichtung (10) nach einem der Ansprüche 1 bis 4, weiter umfassend
eine Projektionseinheit (40), die konfiguriert ist zum Projizieren des auf dem ersten Schirm (23) angezeigten ersten Bilds (M1) und des auf dem zweiten (24) angezeigten zweiten Bilds (M2) zu einer Übertragungsreflexionseinheit (2), die vor einem Betrachter (E) positioniert ist und bewirkt, dass der Betrachter (E) virtuelle Bilder auf Basis des ersten Bilds (M1) und des zweiten Bilds (M2) über die Übertragungsreflexionseinheit (2) visuell erkennt, wobei
der erste Schirm (23) so angeordnet ist, dass ein optischer Pfad von Licht auf Basis des ersten Bilds (Ml), das sich zu dem Betrachter (E) ausbreitet, kürzer ist als ein optischer Pfad von Licht auf Basis des zweiten Bilds (M2) .

## Revendications

1. Dispositif d'affichage (10), comprenant :
un projecteur (20) configuré pour émettre une lumière de projection (L) ayant une première distance de projection (P1) ;
un premier écran (23) disposé à la première distance de projection (P1) depuis le projecteur (20) le long de la lumière de projection (L) et configuré pour recevoir une première lumière de projection (L1) de la lumière de projection (L) et afficher une première image (M1) ;
un deuxième écran (24) disposé à une position à laquelle une distance depuis le projecteur (20) le long de la lumière de projection (L) est plus courte que la distance du premier écran (23) et configuré pour recevoir une deuxième lumière de projection (L2) de la lumière de projection (L) différente de la première lumière de projection (L1) et afficher une deuxième image (M2), **caractérisé en ce que** le dispositif d'affichage comprend en outre
une unité de raccourcissement de distance de projection (25) ayant une puissance optique positive, disposée sur un chemin de la deuxième lumière de projection (L2) entre le projecteur (20) et le deuxième écran (24), et configurée pour raccourcir une distance de projection de la deuxième lumière de projection (L2).

2. Dispositif d'affichage (10) selon la revendication 1, comprenant en outre
une unité de réflexion (22) disposée sur un chemin de la lumière de projection (L) entre le projecteur (20) et le premier écran (23) et configurée pour réfléchir la première lumière de projection (L1) et la deuxième lumière de projection (L2) vers le premier écran (23) et le deuxième écran (24), respectivement, dans lequel
l'unité de réflexion (22) a une première surface réfléchissante (221) qui réfléchit la première lumière de projection (L1) vers le premier écran (23) et une deuxième surface réfléchissante (222) qui réfléchit la deuxième lumière de projection (L2) vers le deuxième écran (24) ; et
l'unité de raccourcissement de distance de projection (25a) est formée sur la deuxième surface réfléchissante (222).

3. Dispositif d'affichage selon la revendication 2, dans lequel
l'unité de réflexion (22) est prévue de telle sorte que la première lumière de projection (L1) et la deuxième lumière de projection (L2) peuvent être réfléchies sur la même surface.

4. Dispositif d'affichage selon l'une quelconque des revendications 1 à 3, dans lequel
une unité de réglage de distribution de lumière (29) ayant une puissance optique négative est disposée sur un chemin optique de la deuxième lumière de projection (L2) entre l'unité de raccourcissement de distance de projection (25) et le deuxième écran (24).

5. Affichage tête haute (1) comprenant le dispositif d'affichage (10) selon l'une quelconque des revendications 1 à 4, comprenant en outre
une unité de projection (40) configurée pour projeter la première image (M1) affichée sur le premier écran (23) et la deuxième image (M2) affichée sur le deuxième écran (24) vers une unité de transmission-réflexion (2) qui est positionnée devant un spectateur (E) et conduit le spectateur (E) à reconnaître visuellement des images virtuelles basées sur la première image (M1) et la deuxième image (M2) par le biais de l'unité de transmission-réflexion (2), dans lequel
le premier écran (23) est disposé de telle sorte qu'un chemin optique de la lumière basée sur la première image (M1) se déplaçant vers le spectateur (E) est plus court qu'un chemin optique de la lumière basée sur la deuxième image (M2).
